(19) Europäisches Patentamt
European Patent Office
Office européen des brevets

(11) **EP 2 326 091 B1**

(12) **EUROPEAN PATENT SPECIFICATION**

(45) Date of publication and mention
of the grant of the patent:
**12.08.2015 Bulletin 2015/33**

(51) Int Cl.:
***H04N 7/24*** *(2011.01)*

(21) Application number: **09175917.5**

(22) Date of filing: **13.11.2009**

(54) **Method and apparatus for synchronizing video data**

Verfahren und Vorrichtung zur Synchronisierung von Videodaten

Procédé et appareil de synchronisation de données vidéo

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**25.05.2011 Bulletin 2011/21**

(73) Proprietor: **NTT DoCoMo, Inc.
Tokyo (JP)**

(72) Inventors:
 • **Schweiger, Florian
  80801, Munich (DE)**
 • **Eichhorn, Michael
  81673, Munich (DE)**
 • **Schroth, Georg
  81243, Munich (DE)**
 • **Steinbach, Eckehard
  82140, Olching (DE)**
 • **Fahrmair, Michael
  81375, Munich (DE)**
 • **Kellerer, Wolfgang
  82256, Fuerstenfeldbruck (DE)**

(74) Representative: **Schöniger, Franz-Josef
Betten & Resch
Patent- und Rechtsanwälte PartGmbB
Theatinerstrasse 8
(Fünf Höfe)
80333 München (DE)**

(56) References cited:
 **EP-A2- 0 838 960      US-A1- 2004 179 608
 US-A1- 2009 074 084**

 • **Jose San Pedro Wandelmer, Sergio Dominguez
  Cabrerizo: "Synchronized digital video
  subsampling to achieve temporal resolution
  independence" DISAM 24 October 2007
  (2007-10-24), pages 1785-1790, XP002577253
  Retrieved from the Internet: URL:
  ieeexplore.ieee.org> [retrieved on 2010-04-09]**
 • **Rui Dai, Ian F. Akyildiz: "A Spatial Correlation
  Model for Visual Information in Wireless
  Multimedia Sensor Networks" 6 October 2009
  (2009-10-06), pages 1148-1159, XP002577254
  Retrieved from the Internet: URL:
  ieeexplore.ieee.org> [retrieved on 2010-04-09]**
 • **Meghna Singh, Irene cheng, Mrinal Mandal, Anup
  Basu: "Optimization of Symetric Transfert Error
  for Sub Frame Video Synchronization" 14
  October 2008 (2008-10-14), pages 554-567,
  XP002577255 Retrieved from the Internet: URL:
  www.springerlink.com/index/HX571UH33T2
  04331.pdf> [retrieved on 2010-04-09]**

## Description

## FIELD OF THE INVENTION

Almost every application that implies more than one video of the same scene requires the synchronization of the recordings. These applications can be found in digital TV-transmissions of sport events, for instance. Here, scenes of interest can be observed synchronously from different viewpoints in a so called "picture-in-picture" format. However, these services require a complex and calibrated infrastructure to align the video streams temporarily by triggering the cameras with an external clock. Even though the need for video synchronization in professional movie production is as old as the clapperboard, it still serves as an important reference for the movie cut. Due to the integration of digital 3D-animations, the time reference gains more and more attention. Up to now, these applications are all solved via complex synchronization hardware, which explains the exclusively professional domain.

However, the ability to ease the synchronization would not only imply an enhancement to professional TV or movie production but in particular facilitates new community based services. With the continuously increasing share of camera phones capable of recording high quality videos, the amount of user-generated content reaches a critical mass that allows a user to find media for any location of interest. Here, the query can be pre-filtered with the aid of GPS tags. A query not only in location but also time would enable the search for events that might have been recorded by several prosumers (users that are producers and consumers of content at the same time). Hence, a vast field of possible media enrichments could base on the availability of multiple video recordings if they can be matched in time.

A simple example would be the shift of the viewpoint while watching a certain event like a street performance, a talk or local sport event. This would also include a temporal stitching application that could generate a movie from individual location matched shots. Here, the audio data of one of the recorders could be mixed with the video data of other prosumers, resulting in a collaborative scene recording.

Further, by extending well-known algorithms of the computer vision domain to video processing, the availability of redundant video information can be used to reconstruct the three-dimensional scenery, subtract the background, the foreground, or create combinations of different viewing points. An obvious example would be the elimination of occlusions, to facilitate an undisturbed recording of the street performance. However, with the powerful information of the three-dimensional structure of the environment, complex augmented reality applications can be developed. Additionally, a super resolution video in both the spatial as well as the temporal domain could be generated, enabling smooth slow motions or zooms.

Nevertheless, the synchronization of the video sequences is a prerequisite for all these applications.

Several approaches to the problem of video synchronization have been proposed in the last years. A possible classification, published in C. Lei and Y.H. Yang. Tri-focal tensor-based multiple video synchronization with subframe optimization. IEEE Transactions on Image Processing, 15(9):2473-2480, 2006, distinguishes between *feature-based*, *intensity based* and *camera motion based* algorithms. The latter category comprises very specialized scenarios with rigidly linked cameras, Obviously, this is a very restrictive assumption. Feature-based approaches are the largest family of synchronization methods. Here, it is assumed that so called image features, i.e., highly discriminative points or edges can be detected in the video frames and related to corresponding features in the other sequence.

The basic idea is that the motions of frame features, which correspond to the same 3D point, are correlated among the different cameras, The major disadvantage of this class of algorithms is that reliable detection, matching, and tracking of features through the sequences is required. This non-trivial problem has not yet been satisfactorily solved, Finally, the intensity-based class of synchronization algorithms focuses on establishing a mapping from every pixel in one video to a pixel in the second one. In some approaches not only the temporal offset between two videos is estimated but also a geometric distortion between the two images. However, the knowledge about the distortion is necessary for an accurate synchronization, which complicates the task even more. In general, intensity-based methods are not capable of dealing with moving cameras. A problem common to all existing approaches is the limitation of viewing directions. Observation directions differing by more than some 30° are usually not supported.

Even though hardware-based synchronization systems allow the highest robustness and accuracy, they are currently not applicable to end-user devices due to their complexity and requirements with respect to the infrastructure. A tagging of the media content with time-stamps is up to now hardly used and would be based on the individual internal device clocks, which can have unlimited discrepancies. Moreover, hardware and time stamp based approaches are not applicable retroactively to already existing videos.

On the other hand, even the most recent software-based approaches imply a high computational complexity. This is due to the fact, that intensity-based techniques process the frames pixel wise and thus perform mathematical operations on very high scale, Feature-based methods extract interest points of the frames to reduce the dimensionality and thus the computation time but in turn require time for the extraction. Camera motion-based approaches are fast in comparison; however, they assume a rigid mounting and baseline of the cameras. Hence, they are not applicable for the applications described before.

Nevertheless, intensity as well as feature-based algorithms require the compliance with certain assumptions. One of the main challenges of current developments is the restriction of the viewing angle. While intensity-based methods can hardly cope with the corresponding distortions, feature-based techniques can cope with angles of typically up to 30°, although at very limited performance. Further, both categories assume knowledge of the camera properties like the focal length or at least require the usage of cameras of the same type. Another very important challenge, especially for intensity-based approaches, is the limitation to camera motion. However, hand-operated and lightweight camera phones clearly result in alternating viewing directions, even after enhancements with image stabilization techniques.

Since feature-based algorithms perform a continuous tracking of interest points, they are susceptible to alternations of the texture as they occur on clothes, for instance. Further, partial occlusions of the scene are a challenge for state-of-the-art feature trackers.

Video synchronization was pioneered by Stein (see e.g. GP Stein. Tracking from multiple view points: Self-calibration of space and time. In Computer Vision and Pattern Recognition, 1999. IEEE Computer Society Conference on., volume 1, 1999) who provided the basis for all subsequent feature-based methods. Different approaches have emerged since then. However, all of them utilize the concept of *Epipiolar Geometry* which provides constraints that can be exploited for synchronization. In 2004, Tuytelaars et al. have presented a feature-based algorithm that finds the temporal offset in a very natural way by examining the distance of rays of sight (see e.g. T. Tuytelaars and L. Van Gool. Synchronizing video sequences. In Computer Vision and Pattern Recognition, 2004. CVPR 2004. Proceedings of the 2004 IEEE Computer Society Conference on, volume 1).

As opposed to feature dependent solutions, which are also referred to as trajectory-to-trajectory alignment, intensity based approaches are sometimes described as *sequence-to-sequence alignment*. Caspi et al. have coined this term. Their work on spatio-temporal alignment laid the foundation in this domain (see e.g. Y. Caspi and M. Irani, A step towards sequence-to-sequence alignment. In IEEE Conference on Computer Vision and Pattern Recognition, 2000. Proceedings, volume 2, 2000).

Also several basic intensity-based algorithms have been proposed. One example is described in M. Ushizaki, T. Okatani, and K. Deguchi. Video synchronization based on co-occurrence of appearance changes in video sequences. In Proceedings of the 18th International Conference on Pattern Recognition-Volume 03, pages 71-74. IEEE Computer Society Washington, DC, USA, 2006, where general brightness changes in a video are captured by simply summing up intensity changes from one frame to the next. This gives sort of a "brightness change profile" over time, which can be compared to that of other (static) cameras observing the same scene - from the same overall direction.

However, altogether, current video synchronization approaches imply several assumptions that pose a barrier for the mass-market usage of most applications that base on the synchronization of video data.

EP 0 838 960 discloses a method for video content verification, operative to compare and verify the content of a first audio-visual stream with the content of a second audio-visual stream, comprising the steps of extracting characteristic data from a first audio-visual stream, extracting characteristic data from a second audio-visual stream, and comparing the extracted characteristic data from the first and second audio-visual streams. The invention also provides a system for carrying out the method.

US 2004/179608 A1 discloses a method for dequantizing quantized data is provided, where the quantized data includes multiple encoded versions of source data. An initial encoding of the source data is received, where the initial encoding includes a sequence of quantized symbols. At least one additional encoding of the source data is received, where the at least one additional encoding includes a sequence of quantized symbols. The initial encoding and the at least one additional encoding are independently encoded. The initial encoding and the at least one additional encoding are aligned. A quantization interval of a symbol in the initial encoding is determined. A quantization interval of a corresponding symbol in the at least one additional encoding is determined. An intersection of the quantization intervals of the symbol in the initial encoding and the corresponding symbol in at least one additional encoding is determined. Based on the intersection, a dequantized symbol is generated

Jose San Pedro Wandelmer, Sergio Dominguez Cabrerizo: "Synchronized digital video subsampling to achieve temporal resolution independence" discloses a selective video subsampling algorithm to achieve temporal resolution independence in applications with hard requirements on frame sequentially, especially targeted to video identification systems based on fingerprint strings. The algorithm extracts video entropy, and based on the resulting series, a set of intervals and frames fro each interval are selected. The same exact intervals and frames can be repeatedly extracted for any other variation of the original content, which is especially desirable when variations have undergone dramatic quality and frame rate reduction in their distribution. Different from basic subsampling techniques, the proposed method is not just able to get a frame set of equal length for different frame rate variations, but the generated set includes more frames when events are going on in the video, while less frames are chosen when the video content remains steady. This fact provides a significant improve of performance in terms of recall and precision values in video identification applications.

US 2009/074084 A1 discloses a method and a system for adaptive preprocessing for a video encoder. Certain aspects of a method and system for adaptive preprocessing for an encoder may comprise filtering received video data using one or more spatial and/or temporal filtering parameters. The spatial and/or temporal filtering parameters may be adaptively updated to achieve a targeted bit rate based on statistical analysis of received video data and encoder feedback. The statistical analysis of received video data may comprise analysis of statistical inputs such as an encoding standard of the received video data, an average quantization factor, an input noise level, an average picture luma level, a motion vectors histogram, and a content type detection of the received video data. The spatial filtering parameters may be adaptively updated during an I frame of the received video data and the temporal filtering parameters may be adaptively updated per frame of the received video data.

SUMAMRY OF THE INVENTION

The present invention is defined in the independent claims. The dependent claims define embodiments of the invention.

According to one embodiment there is provided a method for determining the temporal relationship between a first video sequence and a second video sequence, said method comprising:

obtaining from said first video sequence a first parameter such that the evolvement of said first parameter over time corresponds to the change of the entropy of said first video sequence over time;
obtaining from said second video sequence a second parameter such that the evolvement of said second parameter over time corresponds to the change of the entropy of said second video sequence over time;
matching the evolvement of said first parameter over time to the evolvement of said second parameter over time to thereby determine the temporal relationship between the two video sequences.

With such an approach there is determined a "fingerprint" for the respective two video sequences which is based on their entropy or the entropy change over time. This is representative of or corresponds to the amount of information necessary to encode the video sequence and is therefore a measure of the complexity of the video sequences.

The resulting parameter as a function of time corresponds to the video sequence from which it has been derived, and then by trying to match the two parameters as a function of time one can determine their temporal relationship and hence the temporal relationship of the two video sequences.

With such an approach movement of objects in the video sequence particularly contribute to the entropy, and moreover their influence on the entropy is to some extent independent of the line of sight and even of the motion of the camera. Therefore the approach works surprisingly well even with videos taken from different angles or with cameras which are moving.

According to one embodiment said first and said second parameter respectively are one of the following:

the entropy or the conditional entropy or the block entropy or any entropy related or entropy based parameter as derived from said first or said second video sequence for the individual frames or a group of frames of said first and second video sequences;
the bit rate or the frame size as obtained from a video codec which encodes or decodes the first or second video sequence.

Entropy or conditional entropy or block entropy are direct measures of the information content of a frame of a group of frames of a video sequence.

A particularly convenient approach is to make use of a video codec which due to its compression and motion estimation capability produces an output data stream the bit rate (or frame size) of which corresponds directly to the entropy of the video sequence. If the sequence is complex and has a lot of differently moving objects, then the entropy raises and hence also the bit rate (or frame size) produced by the encoder. On the other hand, still or almost still sequences have low entropy and hence a low bit rate.

As a consequence the output of a video codec can be directly used to obtain the entropy related parameter and its evolvement over time. Alternatively, an already encoded video sequence which is read from a file can be processed such as to obtain the bit rate as a function of time and then use it for matching with another sequence and its bit rate.

According to one embodiment a preprocessing is performed which comprises one or more of the following:

obtaining a differential value of said parameter which is used to represent the entropy change of said first and second video sequences over time;
applying a function which gives more weight to lower intensity values and less weight to higher intensity values;
applying a filter function to perform a smoothing.

Obtaining a differential value reduces the effect of continuous camera motion and strengthens the influence of actual scenery changes.

By applying a function which puts more emphasis on lower intensity values compared to higher intensity values the influence of single events which strongly influence the entropy, such as the entering of a new person into the scene, can be decreased compared to other more gradual changes or events which occur over time.

By applying a filtering function a smoothing can be performed.

With such a preprocessing the overall robustness of the matching of the entropy related parameters of the two video sequences can be increased.

According to one embodiment the method further comprises:

performing a dynamic time warping to carry out a non-linear match between said first and said second video sequence.

This makes it possible to take into account videos taken or played back at different speeds.

According to one embodiment the method further comprises:

subtracting the contribution of a subset of blocks or pixels of the individual frames to the parameter being indicative evolvement of the entropy change of said first or second video sequence over time.

If for examples the blocks corresponding to the edges of a frame are subtracted, then the influence of camera motion which reveals new texture at the edge of the images can be reduced, and the resulting entropy related parameter becomes more dependent on the actual motion of objects within the scenery. Similarly, the contribution of other blocks or individual pixels of the frame to the entropy related parameter may be subtracted to further enhance the accuracy and robustness of the parameter.

According to one embodiment the method further comprises:

performing said match of said evolvement of said first and said second parameter by calculating a correlation function, in particular a cross correlation.

In this way the temporal relationship between the two sequences can be easily and conveniently determined.

According to one embodiment the method further comprises:

iterate the correlation of the first parameter of said first video sequence over all possible selections of a certain length of said second video sequence, and use a combined value such as the median or the average of the correlation maxima as the result.

In this way the robustness of the determination of the maximum correlation result can be further improved.

According to one embodiment there is provided an apparatus for determining the temporal relationship between a first video sequence and a second video sequence, said apparatus comprising:

a module for obtaining from said first video sequence a first parameter such that the evolvement of said first parameter over time corresponds to the change of the entropy of said first video sequence over time;
a module for obtaining from said second video sequence a second parameter such that the evolvement of said second parameter over time corresponds to the change of the entropy of said second video over time;
a module for matching the evolvement of said first parameter over time to the evolvement of said second parameter over time to thereby determine the temporal relationship between the two video sequences.

In such a way an apparatus for implementing a video synchronization method can be implemented.

According to one embodiment the apparatus further comprises:

one or more modules to perform the method steps of any of the further embodiments of the invention.

According to one embodiment there is provided a computer program comprising computer program code which when being executed on a computer enables said computer to carry out a method according to one of the embodiments of the invention.

DESCRIPTION OF THE DRAWINGS

Fig. 1 schematically illustrates a scene and its motion compensation.
Fig. 2 schematically illustrates a further scene and its motion compensation.
Fig. 3 schematically illustrates an embodiment of the invention.
Fig. 4 schematically illustrates two scenes synchronized by using an embodiment of the invention.
Fig. 5 schematically illustrates the bitrates of the scenes of Fig. 4.
Fig. 6 schematically illustrates the correlation result of the scenes of Fig. 4.
Fig. 7 schematically illustrates the bitrates of two further scenes.
Fig. 8 schematically illustrates the correlation result of the scenes of Fig. 7.
Fig. 9 schematically illustrates two scenes synchronized by using an embodiment of the invention.
Fig. 10 schematically illustrates the bitrates of two further scenes.
Fig. 11 schematically illustrates the correlation result of the scenes of Fig. 10.
Fig. 12 schematically illustrates two scenes synchronized by using an embodiment of the invention.

**DETAILED DESCRIPTION**

Several state-of-the-art video synchronization approaches try to reconstruct as much information of the scenery as possible to imitate the human way of detecting the temporal mismatch of two sequences. However, the approach suggested by the present invention aims at a completely different and high-level fingerprint to align the videos in the temporal domain.

According to an embodiment of the present invention there is calculated the entropy or an entropy related parameter (or an approximation thereof) for a frame of a video sequence or for a group of frames of a video sequence. This parameter then evolves over time, since it can be calculated for different frames or different groups of frames of the video sequence, and in this way it may be regarded as a kind of a "fingerprint" of the video sequence. If there are two video sequences which are to be matched or synchronized, then the parameter is calculated for both video sequences which results in two sequences of parameters, one for the first video sequence and one for the second video sequence. A single parameter in the sequence thereby may correspond to a single video frame or to a group of video frames of the video sequence to which it corresponds..

These two parameter sequences may then be "matched", e.g. by performing a cross correlation or any other operation which results in their temporal relationship (the "time difference" or difference in "number of frames"), and in this way one can determine how much the first video sequences has to be shifted in time to match with the second video sequence.

Let us now turn to the calculation or determination of the "parameter" which is an entropy related parameter. In one embodiment there may just be calculated the entropy of the individual video frames by using the well known definition of the entropy which is given as:

$$H(X) = \mathbb{E}_X[I(x)] = -\sum_{x \in X} p(x) \log p(x).$$

Here $I(x)$ is the self-information and $E_x$ is the expected value. p(x) is the probability that the value x occurs.

A skilled person will be capable of calculating the entropy or an approximation of the entropy for an individual frame of a sequence using this formula.

Just to give one concrete example, to calculate the entropy for an individual frame one may divide the frame into small blocks and by looking how often a certain value x occurs at a certain position of the block one may obtain a probability distribution P(x). This can then be used to calculate the entropy (or the entropy related parameter) for the individual frame, and in the end this results in a parameter sequence corresponding to the frame sequence. The parameter sequences of the two video sequences then can be matched by performing a correlation.

Alternatively one may calculate an entropy related parameter which is based on more than one frame. One such example is the calculation of the conditional entropy (equivocation) which is calculated taking into account not only one frame but also its preceding frame. This takes into account that succeeding frames are not statistically independent, but instead with some probability depend on each other. Assume that frame n-1 takes the value A, then one may calculate the conditional entropy for frame n which takes the value X as follows:

$$H(X|A) := -\sum_{x \in M} P(X = x|A) \log_b P(X = x|A)$$

By looking at several sequences of two frames one may derive a probability distribution indicating how likely it is that a certain pixel of the frame will assume value x if its value in the preceding frame is A. The thus obtained probability distribution can then be used to calculate the conditional entropy for each frame as an entropy related parameter. Then the two entropy related parameters of the two video sequences may be matched to obtain their temporal relationship.

In a further embodiment not only one preceding frame is taken into account but even more than one preceding frames. This may then lead to the block entropy as the entropy related parameter which is calculated for a certain video frame and which is based on this frame and a group of frames preceding it.

Further enhancements of the calculation of the entropy related parameter can also be envisaged. For example one may take into account a motion estimation to further enhance the robustness. This may lead to taking into account how much a certain pixel has moved compared to the previous frame, so that for obtaining the probability distribution the pixel is not compare with the same pixel in the previous frame but with the pixel of the previous frame which corresponds to it when taking into account motion estimation.

In the following there will now be described an embodiment which makes used of the bit stream as produced by a video encoder. Such video encoders attempt to compress a video as much as possible by compression algorithms. Since the maximum compression which is theoretically possible is linked to the entropy of the video sequence, the bit stream which is produced by a video codec corresponds to an "entropy related parameter".

In one embodiment the bit rate of a video stream (or a parameter derived therefrom, e.g. the frame size in bytes or a logarithmic value or a root value thereof) and its change over time is used as a kind of a "fingerprint" of the video sequence which can be used to "correlate" a certain video sequence with another video sequence (or its respective "fingerprint") to identify their relationship in the time domain, in other words to identify the time shift or time lag between the two video sequences. The bit rate (or frame size in bits or bytes) as a function of time (or frame number) therefore in one embodiment can be used to represent the video sequence, and these representations of different video sequences can then be correlated (e.g. by calculating a cross correlation) to identify their temporal relationship.

With such an approach a temporal relationship (time lag or time shift) between two video sequences can be determined without performing a complicated feature analysis. Nevertheless, the time shift between two sequences can be determined very accurately, even for sequences which have been taken from different points of view and even when taken with moving cameras.

This may at a first glance look very amazing. The surprising fact that this approach, which does not need the very large computation efforts or complex hardware of the prior art, works - and surprisingly even works well independent of the point of view and even independent of camera motion - can be understood when considering the following.

Viewing the problem from an information theoretical point of view, one may state that the amount of change in a scene and thus the entropy of the video signal are almost independent of the viewpoint. Whether we observe a moving person from the left or the right side changes only the direction but not the amount of information.

However, the entropy of a scene is only a theoretical measure and depends very much on the prior knowledge. Nevertheless, video encoders aim at the minimal necessary amount of data to save the essential information in the video. Thus, the output bit rate indicates the amount of information and the complexity which is necessary to encode it. This makes it possible to use the bit rate of the encoded video as a fingerprint for the change in the scenery and therefore the temporal alignment.

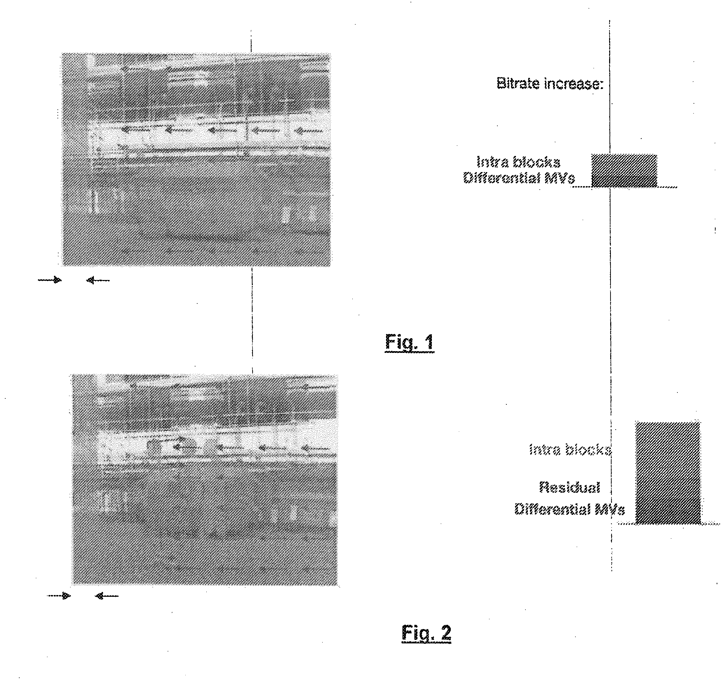

Nevertheless, one might argue that changes in the video and thus the bit rate are not only increased by motion in the scene but also due to camera motion. However, as state-of-the-art hybrid video encoders offer sophisticated motion compensation, the image changes caused by camera motion can be represented with a lower bit rate than complex alternations, which are typical for changes in the scene. Generally, an encoder splits the information implied in a video frame in image blocks and corresponding motion vectors (MV). These vectors indicate the change in position relative to the camera coordinate system. Thus, image blocks of the previous frame are reused and positioned at the location determined by the MV. Hence, a camera pan results in motion vectors that compensate for the position change of the blocks in the image. This situation is schematically illustrated in Fig. 1 which on the left-hand side shows a scene with its motion vectors and on the right-hand side shows the corresponding contribution to the bit rate. Since most MVs have about the same magnitude and orientation (as can be seen from Fig. 1), a differential encoding makes it possible to achieve low bit rates. Still, the area that has not been observed before (marked by the arrows at the bottom of the left-hand side of Fig. 1) has to be added to the data stream. This then results in the contribution to the bit rate shown on the right-hand side of Fig. 1 as "Intra-Blocks", while the other part contributing to the bit rate are the differential motion vectors (MVs).

On the other hand, the required bit rate to encode the diverse motion vectors caused by object motion in the scene is much more difficult to encode and implies more information. Further, changes in the scene are complex and fine structured such that the coarse segmentation in block-based motion estimation and compensation typically generates many small blocks and hence higher rate for block pattern and motion vector signaling. The less precise compensation and the fine and complex image alternations lead to a larger residual of the motion compensation that has to be transmitted. This is schematically illustrated in Fig. 2 which shows a motion vector field, covered and uncovered background, and on the right-hand side the bit rate increase due to joint camera and object motion. The right-hand side of Fig. 2 again shows the contribution to the bit rate which now has three components, the differential motion vectors, the residual component mentioned before, and the Intra Block component.

In case of Fig. 2, additionally, the moving person increases the bit rate significantly since he exposes a larger amount of new texture. Hence, changes in the scene, and thus its entropy, are closely related to the required bit rate.

This may be regarded as the theoretical basis explaining why the bit rate can be used as a "fingerprint" of a video sequence which then can be used to "match" or "correlate" different sequences.

The approach is based on the fact that scene motion defines synchrony, where independent camera motion in fact is irrelevant. Motion of objects in the scene yields a high entropy video signal, such moving objects "surprise" the predictor of a video codec, and therefore they lead to a raise of the bit rate (and correspondingly the frame size of the encoded frames). Therefore, the motion and the bit rate are closely related, and hence the bit rate can be used as a parameter which corresponds to the evolvement of the entropy of a video sequence over time. This parameter (in units of bit rate of frame size) as a function of time (or frame number) can then be matched or correlated with the bit rate or frame size of another video sequence.

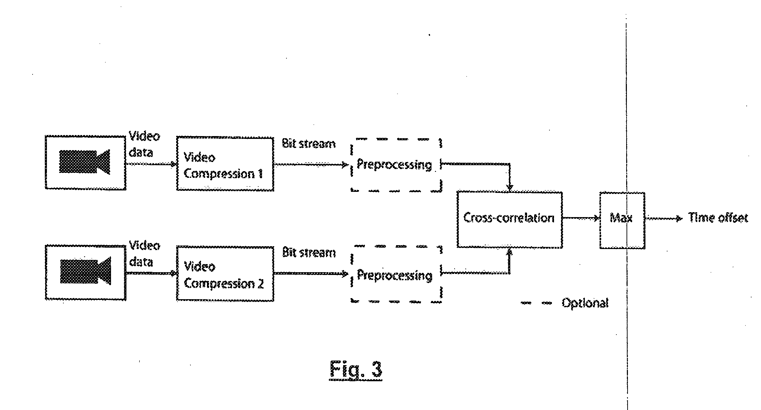

Therefore, with the bit rate as a fingerprint of the temporal alignment, it is then possible to synchronize two videos by cross correlating their bit rate over time using an apparatus or system as schematically illustrated in Fig. 3. The video data from two different cameras are respectively compressed through some video codec, and this results then in two bit streams (having corresponding bit rates) from the different cameras. Then there follows an (optional) preprocessing of these bit streams which may comprise e.g. the transformation of their bit rates to a logarithmic scale or any other preprocessing which can be performed before doing the actual correlation, such as for example the subtraction of the outer blocks from the bit rate which will be explained in somewhat more detail later. Another example of pre-processing may comprise to obtain any derived value from the actual bit rate values, for example to obtain the differential bit rate as the derivative of the actual bit rate. Moreover, instead of a logarithmic function a root function may be applied, or any function which amplifies puts more emphasis to the lower values compared to higher values of the bitstream signal. Furthermore, a filter function (high-pass, low pass or band pass filter) may be applied for smoothing the bitstream signal.

By then trying to "match" the two resulting data streams (by matching e.g. their bit rates or frame sizes as they evolve over time) which have been derived from the bit streams through the pre-processing, one can then determine the time offset between the videos. The "matching" can for example be carried out by performing a correlation, such as e.g. a cross correlation, and by searching for the maximum correlation value. Due to the correlation approach, the proposed algorithm is even less susceptible to camera motion since the resulting changes in the bit rate are uncorrelated to those caused by the scene motion. Further assuming that the fraction of the bit rate induced by the camera motion is constant to some extent, a normalized cross correlation can be used in one embodiment. To attenuate large changes in the bit rate, which can be caused by a change in lighting, for instance, dominating smaller but equally important changes, according to one embodiment a logarithmic scale is applied to the bit rate.

Even though this very basic algorithm makes it possible to synchronize videos very precisely under conditions that do not comply with the requirements of state-of-the-art approaches, further, enhancements to the approach can be implemented. Examples for such enhancements are:

- In one embodiment, since the camera is not assumed to be mounted on a tripod, it is exposed to a continuous motion that results in a constant share of the bit rate. Correlating the differential bit rate can reduce these effects and strengthen the influence of the actual scenery changes. For example, according to one embodiment instead of the bit rate there can be used the first derivative of the bit rate. Further, according to one embodiment the selection or the portion of the bit stream may also be varied or optimized. E. g. according to one embodiment the correlation is performed with a randomly determined selection of the bit stream. According to one embodiment, however, one could iterate over all possible selections of a certain length and use the median of the correlation maxima as the result.

- An enhancement that potentially eliminates a large fraction of the effects of slight camera motions is the subtraction of the bit rate of the outer blocks of the individual frames. These blocks usually contain the information of previously unobserved texture. By reducing the bit rate to the blocks that are not affected by the revealing of new texture along the image boundaries, the influence of camera motion is limited to the differential encoding of the motion vectors.

- In order to tackle the problem of different or even varying frame rates and possible frame drops, a technique termed *Dynamic Time Warping* (DTW) can be employed. The idea behind this is to find a non-linear mapping between time instants in two videos instead of a constant offset. Hence, we would end up with individual (but globally consistent) temporal offsets for every frame in a video sequence. If the playback of the other video is momentary slowed down for some reason, the instantaneous offset would simply increase, and decrease again when the second video recovers. DTW involves the partitioning of the bit rate curves in smaller snippets for each of which the most suitable offsets can be searched. Another issue that could be fixed by DTW is the presence of passers-by like in the later discussed "Charly" data set. The parts of the video, which include the misleading objects, would be assigned slightly different offsets than all the "proper" frames. With a simple decision by majority, these outliers could then be excluded from further consideration.

- Due to the results presented later and improvements with the aid of the above-mentioned enhancements, sub frame accuracy can be reached by embodiments of the invention. By interpolating the video frames or simply the bit rate in time, one can achieve a temporal alignment precision that is relative to the applied sampling factor.

- To not only determine the time offset but also whether a temporal match exists at all, one can set a threshold for the maximum correlation value. Only if such a (minimum) threshold is exceeded, there may then be concluded that a match exists. One may further investigate the slope of the maximum to generate a measure for the robustness of the match. Hence, one can identify temporally

matching videos without performing a computationally complex feature extraction step.

To illustrate the advantages of the proposed approach, it is evaluated with respect to the challenges for state-of-the-art algorithms outlined previously. Concerning the computational complexity, it is possible to either use the already existing bit stream of compressed video data or to compress the video into a new format, as it is done on most online video platforms. Based on the extracted bit rate only a simple one-dimensional cross correlation has to be performed. Thus, in the case of encoded video data, very little computation time is required.

As described previously, the approach is based on a viewing angle invariant temporal fingerprint. Hence, even recordings that have an angle of 180° between the viewpoints, and thus face each other, can be synchronized. However, if the angle is exactly 90° and movements are performed on only one camera axis for the whole length of the sequence, the scene could not be synchronized. However, this synthetic scenario would imply that no change can be observed in one of the cameras.

Due to the properties of video codecs that allow to efficiency compensate the effects of camera motion and the usage of a cross-correlation approach, influences of usual pans and shakes can be reduced.

To allow the synchronization of videos from unknown sources, which is crucial for the usage in community based applications, one may simply normalize the bit rate to perform comparisons that are invariant to the spatial resolution of the recordings. As no calculated geometric measure is calculated, no further adaptation has to be done. In the following some experimental results of the proposed approach will be explained.

Experimental results

In the following there will be illustrated the performance of the described approach for three examples of data sets, the so called "Charly", "CapoEha!", and "Nicolas" data sets. For all three there is selected a section of one of the corresponding sequences to try to find the time offset relative to the other sequence. Since the sequences have not been recorded synchronously, the true offset had to be determined by inspection and should be correct up to 2 frames. To evaluate the performance of the algorithm, one can inspect the deviation of the calculated offset to the manually determined ground truth. The bit streams have been generated by encoding the videos with a H.264/AVC video compression codec using a fixed and coarse quantization. The group of pictures (GOP) structure was (I)PPPPP(I)PPPPP(I)PPPPP...., and the GOP length 500. A normalized cross correlation has been used for the comparison or matching.

a) Charly

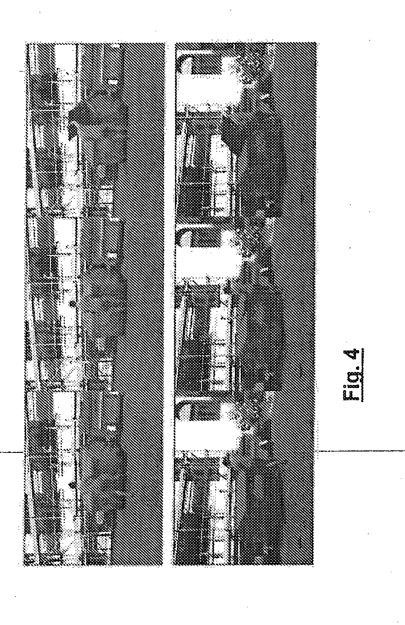

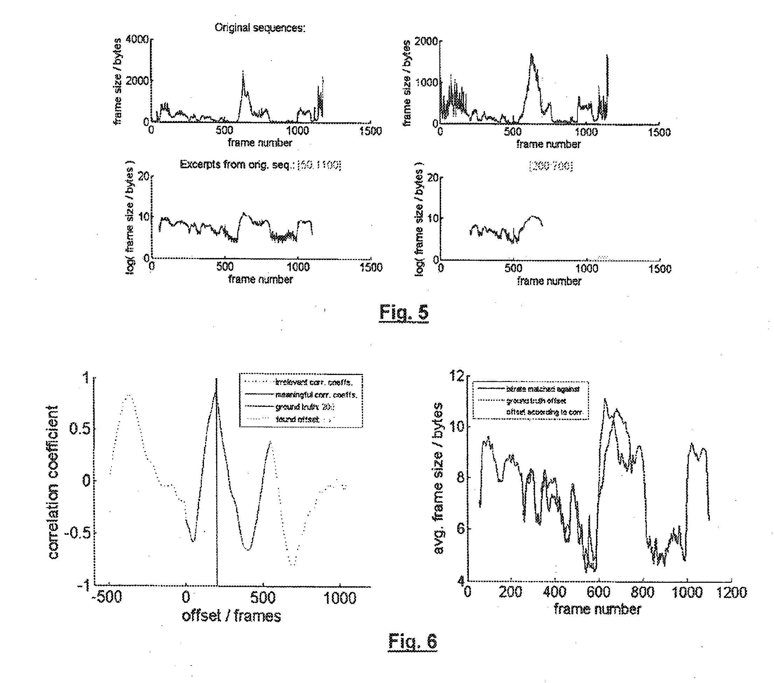

The first dataset named "Charly" implies recordings of two viewpoints with a wide base line of 10 meters and an angle of approximately 70°. The scene begins with a person appearing in the field of view. The two (already matched) scenes taken from different angles are shown in Fig. 4. The subsequently performed actions at the garbage can result in a relatively low bit rate in the first 500 frames. The evolvement of the frame size (corresponding to the bit rate) over time is shown in Fig. 5, where the upper part shows the original scenes (the first video scene left and the second one right) and the lower par shows the same after preprocessing which includes the application of a logarithmic scale and the selection of a certain frame set. Then, a group of four persons enters the scene (not shown in Fig. 4), causing a large amount of new information, which reflects in a peak in the bit stream (as can be seen from Fig. 5). However, due to the large baseline, the persons do not appear in the individual recordings at the same time indicated by the offset of about 20 frames between the peaks. After the group passes by, a last person enters the scene and leaves it as well which corresponds to the peak at the end of the scene.

To perform the synchronization as described above, a bit stream of 500 frames length is selected in the second recording (as shown in the lower right side of Fig. 5). By applying the logarithmic scale to the bit rate, the influence of the group of persons is equalized to the other events in the scene. Hence, the negative effects of a wide baseline can be minimized. However, in a realistic scenario, the lines-of-sight of the cameras cross at the objects of interest. Hence, the offset between appearing objects should be very low.

However, the resulting synchronization, shown in Fig. 4 proves the capability of handling even large offsets with a high accuracy of about 3 frames. Fig. 6 illustrates the correctness of the synchronization by comparing temporally matched frames of the two recordings. It shows the results of the correlation of the selected and preprocessed "Charly" bit rate curves and their alignment at the estimated and true time offset

## b)CapoEha!

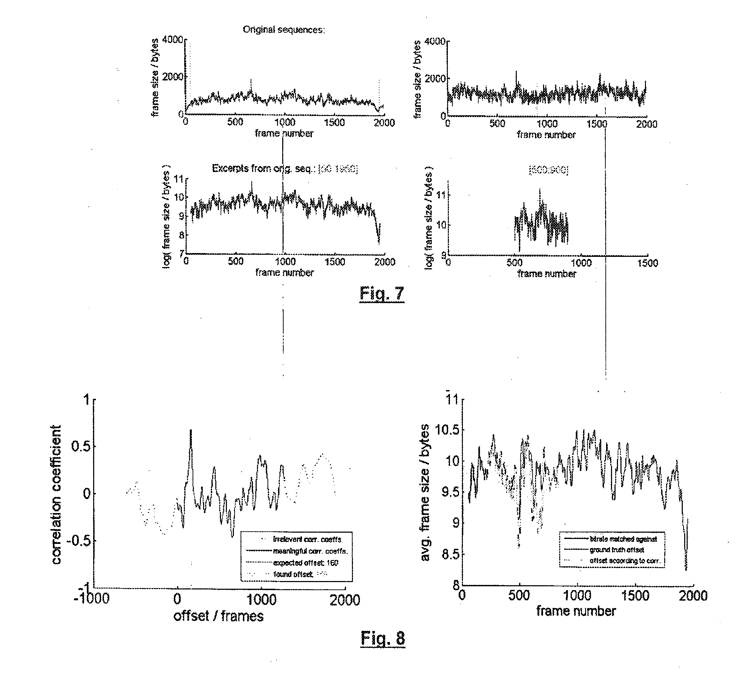

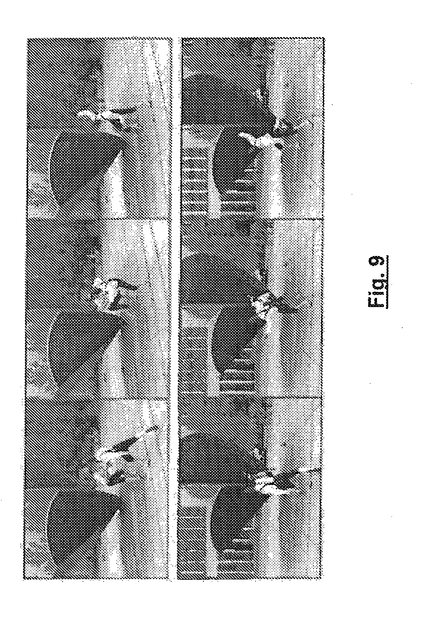

While in the "Charly" dataset clearly distinguishable events occurred, in the "CapoEHA!" dataset a street performance of two persons is recorded. Here, the continuous motion in the videos results into a relatively constant bit rate with high frequency alternations. The baseline between the viewpoints is 2 meters and the angle is approximately 30°. Again, a selection of the bit stream of the second video is correlated to the first and a logarithmic scale is applied (as illustrated in Fig. 7). The results in Fig. 8 impressively show the exact determination of the time offset with a deviation of one to the manually determined ground truth. Even though the motion in the sequence cannot be segmented into discrete events and a relatively short selection of the bit stream of the second video is used, the approach robustly finds the optimal temporal alignment of the recordings as shown in Fig. 9. The quality of the correlation could be further improved by increasing the selection, however, it would require more computation time.

## c) Nicolas

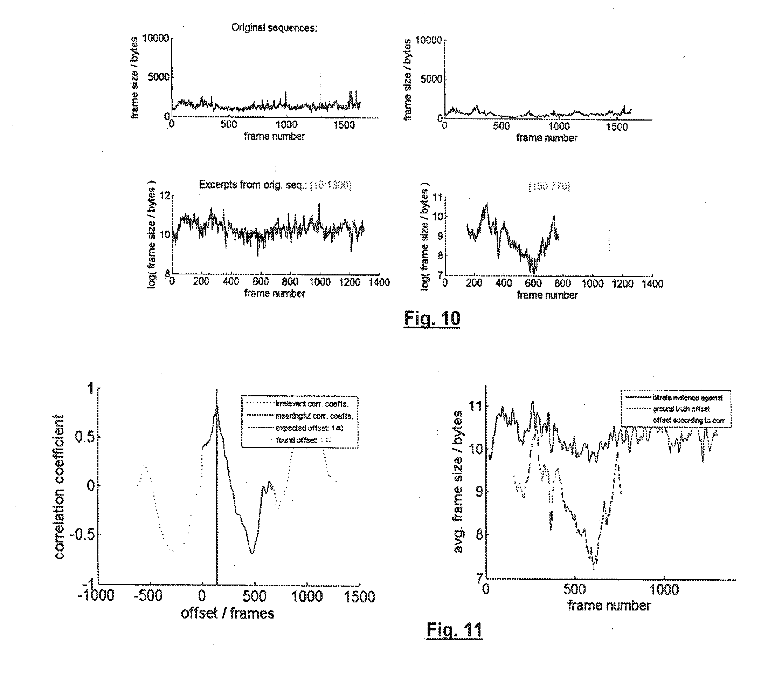

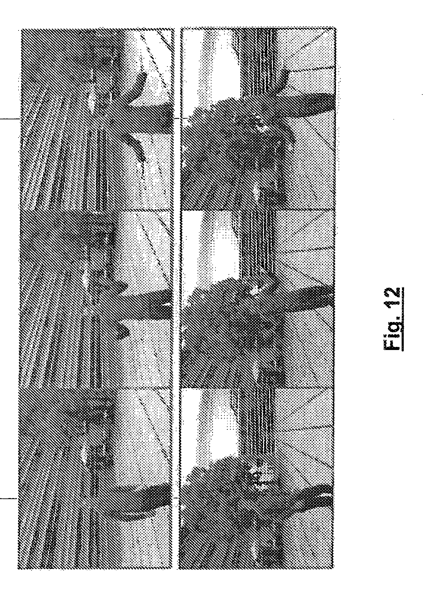

To illustrate the invariance to camera motion, the "Nicolas"dataset implies two videos whereas the first one is hand operated and the second one is mounted on a tripod, which is reflected in the different average bitrates shown in Fig. 10. To make the scenario even more challenging, small camera pans are applied and an average angle between the viewpoints of approximately 45° is used. Again, one cannot segment the motion in discrete events and a relatively constant bit rate results. However, still a very precise estimation of the time offset can be computed as illustrated in Fig. 11 and 12. Further, by inspecting the slope of the correlation plot, an indication of the robustness of this temporal alignment can be generated.

The experimental results show that the proposed approach works well even under very difficult conditions.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computer, a PDA, a mobile phone, a smartphone, or anything alike.

## Claims

1.    A method for determining the temporal relationship between a first video sequence and a second video sequence, said method comprising:

obtaining from said first video sequence a first parameter such that the evolvement of said first parameter over time corresponds to the change of the entropy of said first video sequence over time;
obtaining from said second video sequence a second parameter such that the evolvement of said second parameter over time corresponds to the change of the entropy of said second video over time, wherein said first and said second parameters respectively are the bit rate or the frame size as obtained from a video codec which encodes or decodes the first or second video sequence;
matching the evolvement of said first parameter over time to the evolvement of said second parameter over time, wherein
said matching of said evolvement of said first and said second parameter over time is performed by calculating a cross correlation function between the evolvement of said first parameter over time with the evolvement of said second parameter over time to thereby determine the temporal relationship between the two video sequences.

2.    The method of claim 1, wherein a preprocessing is performed which comprises one or more of the following:

EP 2 326 091 B1

obtaining a differential value of said parameter which is used to represent the entropy change of said first and second video sequences over time;
applying a function which gives more weight to lower intensity values and less weight to higher intensity values;
applying a filter function to perform a smoothing.

3. The method of one of the preceding claims, further comprising:

performing a dynamic time warping to carry out a non-linear match between said first and said second video sequence.

4. The method of one of the preceding claims, further comprising:

subtracting the contribution of a subset of blocks or pixels of the individual frames to the parameter being indicative evolvement of the entropy change of said first or second video sequence overtime.

5. The method of one of the preceding claims, further comprising:

iterate the correlation of the first parameter of said first video sequence over all possible selections of a certain length of said second video sequence and use the median or the average of the correlation maxima as the result.

6. An apparatus for determining the temporal relationship between a first video sequence and a second video sequence, said apparatus comprising:

a module for obtaining from said first video sequence a first parameter such that the evolvement of said first parameter over time corresponds to the change of the entropy of said first video sequence over time;
a module for obtaining from said second video sequence a second parameter such that the evolvement of said second parameter overtime corresponds to the change of the entropy of said second video over time, wherein said first and said second parameters respectively are the bit rate or the frame size as obtained from a video codec which encodes or decodes the first or second video sequence;
a module for matching the evolvement of said first parameter over time to the evolvement of said second parameter over time wherein
said module is adapted to perform said match of said evolvement of said first and said second parameter over time by calculating a cross correlation function between the evolvement of said first parameter over time with the evolvement of said second parameter over time to thereby determine the temporal relationship between the two video sequences.

7. The apparatus of claim 6, wherein a preprocessing is performed which comprises one or more of the following:

obtaining a differential value of said parameter which is used to represent the entropy change of said first and second video sequences over time;
applying a function which gives more weight to lower intensity values and less weight to higher intensity values;
applying a filter function to perform a smoothing.

8. The apparatus of one of the claims 6 or 7, further comprising:

a module for performing a dynamic time warping to carry out a non-linear match between said first and said second video sequence.

9. The apparatus of one of the claims 6 to 8, further comprising:

a module for subtracting the contribution of a subset of blocks or pixels of the individual frames to the parameter being indicative evolvement of the entropy change of said first or second video sequence over time.

10. The apparatus of one of the claims 6 to 9, wherein said correlation function is a cross correlation.

11. The apparatus of one of the claims 6 to 10, further comprising:

a module for iterating the correlation of the first parameter of said first video sequence over all possible selections of a certain length of said second video sequence and use the median of the correlation maxima as the result.

12. A computer program comprising computer program code which when being executed on a computer enables said computer to carry out a method according to one of claims 1 to 5.

## Patentansprüche

1. Ein Verfahren zum Ermitteln der zeitlichen Beziehung zwischen einer ersten Videosequenz und einer zweiten Videosequenz, wobei das Verfahren aufweist:

   Erhalten eines ersten Parameters von der ersten Videosequenz derart, dass die Entwicklung des ersten Parameters über die Zeit der Veränderung der Entropie der ersten Videosequenz über die Zeit entspricht;
   Erhalten eines zweiten Parameters von der zweiten Videosequenz derart, dass die Entwicklung des zweiten Parameters über die Zeit der Veränderung der Entropie des zweiten Videos über die Zeit entspricht, wobei der erste und der zweite Parameter die Bitrate oder die Framegröße sind, so wie sie von einem Video-Codec erhalten werden, der die erste oder zweite Videosequenz codiert oder decodiert;
   Matchen der Entwicklung des ersten Parameters über die Zeit auf die Entwicklung des zweiten Parameters über die Zeit, wobei
   das Matchen der Entwicklung der ersten und zweiten Parameter über die Zeit durchgeführt wird durch Berechnung einer Kreuzkorrelationsfunktion zwischen der Entwicklung des ersten Parameters über die Zeit mit der Entwicklung des zweiten Parameters über die Zeit, um dadurch die zeitliche Beziehung zwischen den zwei Videosequenzen zu ermitteln.

2. Das Verfahren nach Anspruch 1, wobei eine Vorverarbeitung durchgeführt wird, welche eines oder mehrere der folgenden umfasst:

   Erhalten eines Differenzwertes des Parameters, der verwendet wird, um die Entropieveränderung der ersten und zweiten Videosequenz über die Zeit zu repräsentieren;
   Anwenden einer Funktion, die niedrigeren Intensitätswerten mehr Gewicht gibt und höheren Intensitätswerten weniger Gewicht gibt;
   Anwendung einer Filterfunktion zum Durchführen einer Glättung.

3. Das Verfahren nach einem der vorhergehenden Ansprüche, ferner aufweisend:

   Durchführen eines dynamischen Time-Warping zum Durchführen eines nichtlinearen Matchens zwischen der ersten und zweiten Videosequenz.

4. Das Verfahren nach einem der vorhergehenden Ansprüche, ferner aufweisend:

   Subtrahieren des Beitrags einer Untermenge von Blöcken oder Pixeln des individuellen Frames zu dem Parameter, der die Entwicklung der Entropieveränderung der ersten oder zweiten Videosequenz über die Zeit angibt.

5. Das Verfahren nach einem der vorhergehenden Ansprüche, ferner aufweisend:

   Iterieren der Korrelation des ersten Parameters der Videosequenz über alle möglichen Selektionen einer bestimmten Länge der zweiten Videosequenz und Verwenden des Medians oder des Durchschnitts der Korrelationsmaxima als das Ergebnis.

6. Eine Vorrichtung zum Ermitteln der zeitlichen Beziehung zwischen einer ersten Videosequenz und einer zweiten Videosequenz, wobei die Vorrichtung aufweist:

   Ein Modul zum Erhalten eines ersten Parameters von der ersten Videosequenz derart, dass die Entwicklung des ersten Parameters über die Zeit der Veränderung der Entropie der ersten Videosequenz über die Zeit entspricht;
   ein Modul zum Erhalten eines zweiten Parameters von der zweiten Videosequenz derart, dass die Entwicklung des zweiten Parameters über die Zeit der Veränderung der Entropie des zweiten Videos über die Zeit entspricht, wobei der erste und der zweite Parameter die Bitrate oder die Framegröße sind, so wie sie von einem Video-Codec erhalten werden, der die erste oder zweite Videosequenz codiert oder decodiert;
ein Modul zum Matchen der Entwicklung des ersten Parameters über die Zeit auf die Entwicklung des zweiten Parameters über die Zeit, wobei
das Modul angepasst ist, das Matchen der Entwicklung der ersten und zweiten Parameter über die Zeit durchgeführt wird durch Berechnung einer Kreuzkorrelationsfunktion zwischen der Entwicklung des ersten Parameters über die Zeit mit der Entwicklung des zweiten Parameters über die Zeit, um dadurch die zeitliche Beziehung zwischen den zwei Videosequenzen zu ermitteln.

7. Die Vorrichtung nach Anspruch 6, wobei eine Vorverarbeitung durchgeführt wird, welche eines oder mehrere der folgenden umfasst:

Erhalten eines Differenzwertes des Parameters, der verwendet wird, um die Entropieveränderung der ersten und zweiten Videosequenz über die Zeit zu repräsentieren;
Anwenden einer Funktion, die niedrigeren Intensitätswerten mehr Gewicht gibt und höheren Intensitätswerten weniger Gewicht gibt;
Anwendung einer Filterfunktion zum Durchführen einer Glättung.

8. Die Vorrichtung nach Anspruch 6 oder 7, aufweisend:

Ein Modul zum Durchführen eines dynamischen Time-Warping zum Durchführen eines nichtlinearen Matchens zwischen der ersten und zweiten Videosequenz.

9. Die Vorrichtung nach einem der Ansprüche 5 bis 7, ferner aufweisend:

Ein Modul zum Subtrahieren des Beitrags einer Untermenge von Blöcken oder Pixeln des individuellen Frames zu dem Parameter, der die Entwicklung der Entropieveränderung der ersten oder zweiten Videosequenz über die Zeit angibt.

10. Die Vorrichtung nach einem der Ansprüche 6 bis 9, wobei die Korrelationsfunktion eine Kreuzkorrelation ist.

11. Die Vorrichtung nach einem der Ansprüche 6 bis 10, ferner aufweisend:

Ein Modul zum Iterieren der Korrelation des ersten Parameters der Videosequenz über alle möglichen Selektionen einer bestimmten Länge der zweiten Videosequenz und Verwenden des Medians oder des Durchschnitts der Korrelationsmaxima als das Ergebnis.

12. Ein Computerprogramm aufweisend Computerprogrammcode, der, wenn er von einem Computer ausgeführt wird, den Computer in die Lage versetzt, ein Verfahren gemäß einem der Ansprüche 1 bis 5 auszuführen.

**Revendications**

1. Procédé de détermination de la relation temporelle entre une première séquence vidéo et une seconde séquence vidéo, ledit procédé comprenant :

l'obtention, à partir de ladite première séquence vidéo, d'un premier paramètre de sorte que l'évolution dudit premier paramètre au cours du temps corresponde à la variation de l'entropie de ladite première séquence vidéo au cours du temps ;
l'obtention, à partir de ladite seconde séquence vidéo, d'un second paramètre de sorte que l'évolution dudit second paramètre au cours du temps corresponde à la variation de l'entropie de la dite seconde séquence vidéo au cours du temps, lesdits premier et second paramètres étant respectivement le débit binaire ou la taille de trame tels qu'obtenus à partir d'un codec vidéo qui code ou décode la première ou la seconde séquence vidéo ;
la mise en correspondance de l'évolution dudit premier paramètre au cours du temps et de l'évolution dudit second paramètre au cours du temps, dans lequel
ladite mise en correspondance de ladite évolution desdits premier et second paramètres au cours du temps est réalisée en calculant une fonction de corrélation croisée entre l'évolution dudit premier paramètre au cours du temps et l'évolution dudit second paramètre au cours du temps pour déterminer ainsi la relation temporelle entre les deux séquences vidéo.

**2.** Procédé selon la revendication 1, dans lequel un prétraitement est réalisé, lequel comprend une ou plusieurs des étapes suivantes :

l'obtention d'une valeur différentielle dudit paramètre qui est utilisée pour représenter la variation d'entropie desdites première et seconde séquences vidéo au cours du temps ;
l'application d'une fonction qui donne plus de poids aux valeurs d'intensité inférieures et moins de poids aux valeurs d'intensité supérieures ;
l'application d'une fonction de filtre pour réaliser un lissage.

**3.** Procédé selon l'une des revendications précédentes, comprenant en outre :

la réalisation d'un alignement temporel dynamique afin d'effectuer une mise en correspondance non linéaire entre lesdites première et seconde séquences vidéo.

**4.** Procédé selon l'une des revendications précédentes, comprenant en outre :

la soustraction de la contribution d'un sous-ensemble de blocs ou de pixels des trames individuelles au paramètre indiquant l'évolution de la variation d'entropie de ladite première ou seconde séquence vidéo au cours du temps.

**5.** Procédé selon l'une des revendications précédentes, comprenant en outre :

l'itération de la corrélation du premier paramètre de ladite première séquence vidéo sur toutes les sélections possibles d'une certaine longueur de ladite seconde séquence vidéo et l'utilisation de la médiane ou de la moyenne des maxima de corrélation comme le résultat.

**6.** Appareil de détermination de la relation temporelle entre une première séquence vidéo et une seconde séquence vidéo, ledit appareil comprenant :

un module destiné à obtenir, à partir de ladite première séquence vidéo, un premier paramètre de sorte que l'évolution dudit premier paramètre au cours du temps corresponde à la variation de l'entropie de ladite première séquence vidéo au cours du temps ;
un module destiné à obtenir, à partir de ladite seconde séquence vidéo, un second paramètre de sorte que l'évolution dudit second paramètre au cours du temps corresponde à la variation de l'entropie de ladite seconde séquence vidéo au cours du temps, lesdits premier et second paramètres étant respectivement le débit binaire ou la taille de trame tels qu'obtenus à partir d'un codec vidéo qui code ou décode la première ou la seconde séquence vidéo ;
un module destiné à mettre en correspondance l'évolution dudit premier paramètre au cours du temps et l'évolution dudit second paramètre au cours du temps, dans lequel
ledit module est adapté pour réaliser ladite mise en correspondance de ladite évolution dudit premier et dudit second paramètre au cours du temps en calculant une fonction de corrélation croisée entre l'évolution dudit premier paramètre au cours du temps et l'évolution dudit second paramètre au cours du temps pour déterminer ainsi la relation temporelle entre les deux séquences vidéo.

**7.** Appareil selon la revendication 6, dans lequel un prétraitement est exécuté, lequel comprend une ou plusieurs des étapes suivantes :

l'obtention d'une valeur différentielle dudit paramètre qui est utilisée pour représenter la variation d'entropie desdites première et seconde séquences vidéo au cours du temps ;
l'application d'une fonction qui donne plus de poids aux valeurs d'intensité inférieures et moins de poids aux valeurs d'intensité supérieures ;
l'application d'une fonction de filtre pour réaliser un lissage.

**8.** Appareil selon les revendications 6 ou 7, comprenant en outre :

un module destiné à réaliser un alignement temporel dynamique afin de réaliser une mise en correspondance non linéaire entre ladite première et ladite seconde séquence vidéo.

**9.** Appareil selon l'une des revendications 6 à 8, comprenant en outre :

un module destiné à soustraire la contribution d'un sous-ensemble de blocs ou de pixels des trames individuelles au paramètre indiquant l'évolution de la variation d'entropie de ladite première ou seconde séquence au cours du temps.

10. Appareil selon l'une des revendications 6 à 9, dans lequel ladite fonction de corrélation est une corrélation croisée.

11. Appareil selon l'une des revendications 6 à 10, comprenant en outre :

un module destiné à itérer la corrélation du premier paramètre de ladite première séquence vidéo sur toutes les sélections possibles d'une certaine longueur de ladite seconde séquence vidéo et à utiliser la médiane du maximum de corrélation comme le résultat.

12. Programme informatique comprenant un code de programme informatique qui, lors de son exécution sur un ordinateur, permet audit ordinateur d'effectuer un procédé selon l'une des revendications 1 à 5.

Bitrate increase.

Intra blocks
Differential MVs

Fig. 1

Intra blocks
Residual
Differential MVs

Fig. 2

Fig. 3

Fig. 4

**Fig. 5**

**Fig. 6**

Fig. 7

Fig. 8

Fig. 9

Original sequences:

Excerpts from orig. seq.: [110:1380]

**Fig. 10**

**Fig. 11**

Fig. 12

**EP 2 326 091 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0838960 A
- US 2004179608 A1
- US 2009074084 A1

**Non-patent literature cited in the description**

- **C. LEI ; Y.H. YANG.** Tri-focal tensor-based multiple video synchronization with subframe optimization. *IEEE Transactions on Image Processing,* 2006, vol. 15 (9), 2473-2480
- **GP STEIN.** Tracking from multiple view points: Self-calibration of space and time. In Computer Vision and Pattern Recognition, 1999. *IEEE Computer Society Conference,* 1999, vol. 1
- **T. TUYTELAARS ; L. VAN GOOL.** Synchronizing video sequences. In Computer Vision and Pattern Recognition, 2004. CVPR 2004. *Proceedings of the 2004 IEEE Computer Society Conference,* 2004, vol. 1
- **Y. CASPI ; M. IRANI.** A step towards sequence-to-sequence alignment. In IEEE Conference on Computer Vision and Pattern Recognition, 2000. *Proceedings,* 2000, vol. 2
- Video synchronization based on co-occurrence of appearance changes in video sequences. **M. USHIZAKI ; T. OKATANI ; K. DEGUCHI.** Proceedings of the 18th International Conference on Pattern Recognition. IEEE Computer Society, 2006, vol. 03, 71-74